# EUROPÄISCHE PATENTSCHRIFT

(11) **EP 1 742 726 B1**
(45) Veröffentlichungstag und Bekanntmachung des Hinweises auf die Patenterteilung: **09.02.2011**
(21) Anmeldenummer: 05732731.4
(22) Anmeldetag: 13.04.2005
(51) Int. Cl.: B01F 17/00, B01F 17/16

(54) **VERFAHREN ZUR DISPERGIERUNG UND PASSIVIERUNG VON FEINTEILIGEN PULVERN IN WASSER UND WÄSSRIGEN MEDIEN**
METHOD FOR DISPERSING AND PASSIVATING PARTICULATE POWDERS IN WATER AND AQUEOUS MEDIA
PROCEDE POUR DISPERSER ET PASSIVER DES POUDRES A FINES PARTICULES DANS DE L'EAU ET DANS DES MILIEUX AQUEUX

(30) Priorität: 27.04.2004 DE 102004020559
(43) Veröffentlichungstag der Anmeldung: 17.01.2007
(73) Patentinhaber: Fraunhofer-Gesellschaft zur Förderung der angewandten Forschung e.V., 80686 München (DE); Ceratizit S.A., 8201 Mamer (LU); Gühring OHG, 72458 Albstadt (DE); Kennametal Widia GmbH & Co. KG, 45145 Essen (DE); Kennametal GmbH & Co. KG, Werkzeuge + Hartstoffe, 90766 Fürth (DE); H.C. Starck GmbH, 38642 Goslar (DE); Wolfram Bergbau-und Hütten-GmbH Nfg.KG, 8543 St-Martin i. S. (AT); G. U. S. Beteiligungs GmbH, 66773 Schwalbach/Sarr (DE); Hartmetall AG, 6285 Hitzkirch (CH)
(72) Erfinder: BODEN, Gottfried, 01257 Dresden (DE); THIELE, Sven, 09599 Freiberg (DE); NEBELUNG, Manfred, 01309 Dresden (DE)
(86) Internationale Anmeldenummer: PCT/EP2005/003886
(87) Internationale Veröffentlichungsnummer: WO 2005/107934

(56) Entgegenhaltungen:
- WO-A-01/21298
- DE-A1- 4 212 514
- DE-A1- 19 846 096
- DATABASE WPI Section Ch, Week 200521 Derwent Publications Ltd., London, GB; Class A88, AN 2005-199663 XP002332301 & JP 2005 048122 A (HITACHI CHEM CO LTD) 24. Februar 2005 (2005-02-24)

## Beschreibung

Die Erfindung betrifft ein verfahren zur Dispergierung und Passivierung von feinteiligen Hartmetallpulvern, keramischen Pulvern und Elementpulvern der 3. und 4. Hauptgruppe des Periodensystems der Elemente in Wasser und wässrigen Medien.

Die Erfindung ist besonders bei der pulververarbeitenden Industrie (Keramik-, Hartmetallindustrie) anwendbar.

Die Herstellung von Formkörpern aus Hartmetallen und Keramik erfolgt heute überwiegend über die pulvertechnologische Strecke, bei der die Ausgangspulver zusammen mit Zusätzen (Additiven) in einer Flüssigkeit gemischt und gegebenenfalls gemahlen werden und anschließend die Pulvermischung getrocknet in Formen gepresst und gesintert wird. Während bei der Silikat- und Oxidkeramik dabei vor allem Wasser als Mahl und Mischflüssigkeit (Dispergiermittel, Suspendiermittel) verwendet wird, werden nichtoxidische Pulver wie Hartmetallpulver, nitridische und carbidische Pulver in nichtwässrigen Dispergiermitteln verarbeitet, um Oxidations- und Hydrolyseerscheinungen der Pulver zurückzudrängen oder zu unterbinden. Als nichtwässrige Flüssigkeiten werden hierzu aliphatische und aromatische Kohlenwasserstoffe, Alkohole und Aceton verwendet. Da die Verarbeitung von feinteiligen Pulvern in diesen organischen Flüssigkeiten aus Gründen der technischen Sicherheit und des Arbeits- und Umweltschutzes relativ aufwendig und kostenintensiv ist (explosionsgeschützte Anlagen und Gebäude, Lösungsmittelrückgewinnung, Kreislaufprozesse), wurde versucht, unter Zusatz spezieller Hilfsmittel eine Dispergierung der Pulver in Wasser oder wässrigen Medien durchzuführen.

In EP 1153652 wird ein Verfahren zur Dispergierung von Mischungen von Wolframcarbid und Kobaltpulvern (Hartmetallpulvermischung) zum Teil unter Zusatz weiterer Hartstoffe wie TiC, TaC, TiN, (W,Ti)C, in wässrigen oder ethanolischen Medien unter Zusatz des kationischen Polyelektrolytes Polyethylenimin beschrieben. Dabei wird durch Zugabe von 0,1 bis 10 Masse-%, vorzugsweise 0,1-1 Masse-% von Polyethylenimin einer Molmasse von 5000 bis 50.000, vorzugsweise 10.000 bis 30.000 g/Mol eine gute Dispergierung der Hartmetallpulvermischung in Wasser erreicht und eine für einen nachfolgenden Sprühtrocknungsprozess geeignete Viskosität eingestellt, z.B. 8-20 mPas bei einer Scher-Rate von 10-100 s⁻¹. Für eine Sprühtrocknung geeignete wässrig-ethanolische Hartmetallsuspensionen aus WC-Co-Pulver-Mischungen lassen sich nach WO 98/00256 auch durch Zusatz von 0,01 bis 10 Masse-%, vorzugsweise 0,1-5 Masse-% Dispergierhilfsmittel wie Polyacrylate, Hydroxyethylcellulose, Styren-Maleinsäurecopolymere und Ethylenoxide-Urethan-Copolymere realisieren. Damit sollte allerdings eine Erhöhung des Sauerstoffgehaltes der getrockneten Pulver verbunden sein. Diese wird aber in der Veröffentlichung nicht beschrieben.

In WO 93/21127 werden oberflächenmodifizierte nanoskalige keramische Pulver wie z.B. Si₃N₄, SiC, Al₂O₃ und ZrO₂ hergestellt, indem das jeweilige unmodifizierte Pulver mittels einer niedrigmolekularen (Molmasse bis 500 g/Mol) organischen Verbindung in Wasser und/oder organischen Lösungsmitteln wie Alkoholen dispergiert und anschließend das Suspendiermittel entfernt wird. Als organische Verbindungen (Hilfsmittel) fungieren beispielsweise Carbonsäuren, Amine, β-Dicarbonylverbindungen und Organoalkoxysilane. In DE 4336694 werden die Hilfsmittel zur Dispergierung der keramischen Pulver auf niedrigmolekulare organische Substanzen einer Molmasse bis 1000 g/Mol erweitert. '

Die EP 0771316 beschreibt die Dispergierung nanoskaliger nichtoxidischer Pulver wie TiN, TiC, Si₃N₄ und SiC in organischen Suspendiermitteln mit dem Ziel, sinterfähige Grünkörper herzustellen, wobei als Dispergierhilfsmittel höhermolekulare Stoffe eingesetzt werden, die eine oder mehrere polare Gruppen und einen oder mehrere langkettige aliphatische Reste aufweisen, wie z. B. alkylsubstituierte Imide von Dicarbonsäuren.

In DE 19751355 wird ein Verfahren zur Dispergierung feinteiliger anorganischer Pulver in vorzugsweise Wasser oder wässrigen Medien beschrieben, bei dem als Disperglerhilfsmittel Stoffe biologischer Genese wie z.B. Zucker-, Stärke- und oder Chitinabkömmlinge verwendet werden. Dabei werden insbesondere in wässrigen Medien langzeitstablle Dispersionen erzeugt.

Darüber hinaus ist in DE 19800310 eine Lösung beschrieben, bei der nichtoxidische Keramiken mit Aminosäuren aus wässrigen bzw. organischen Lösungen belegt werden. Weiterhin beansprucht DE 10130161 ein Verfahren zur Konditionierung nichtoxidischer Feinstpulver wie Titannitrid oder Siliciumcarbonitrid, bei dem in einem ersten Schritt in einem organischen Lösungsmittel die Beschichtung der Pulver mit einem tensidischen Hilfsmittel, das Stickstoff in der polaren Kopfgruppe enthält, erfolgt und anschließend in einem zweiten Schritt das beschichtete nichtoxidische Feinstpulver in Wasser oder in Luft weiterverarbeitet wird, wobei der Sauerstoffgehalt der Feinstpulver nicht oder nur geringfügig zunimmt.

Der Nachteil der aufgeführten Verfahren nach dem Stand der Technik besteht darin, dass entweder die Dispergierung feiner und feinster Pulver nicht in Wasser, sondern in organischen bzw. organisch-wässrigen Medien erfolgt oder dass bei einer anschließenden Dispergierung der genannten Pulver in Wasser explizit keine Passivierung der Pulver erreicht wird. Das heißt, dass für nichtoxidische Pulver durch die genannten Hilfsmittel in Wasser zwar eine ausreichende Dispergierung, jedoch kein Schutz vor Oxidation und Hydrolyse beschrieben ist.

Außerdem ist in "DATABASE WPI Section Ch, Week 200521 Derwent Publications Ltd. London GB Class A88. AN 2005-199663 XP 002332301 & JP 2005 048122 A (HITACHI CHEM CO LTD) 24. Februar 2005 (2005-02-24)" ein Verfahren zur Dispergierung von feinteiligen Pulvern in Wasser beschrieben, bei dem als Hilfsmittel wasserlösliche Polyvinylamine und/oder deren Vorprodukte verwendet werden. Nachteilig bei diesem Verfahren ist allerdings, dass es ausschließlich'auf Oxide beschränkt und auf feinteilige nichtoxidische Pulver und Elementpulver nicht anwendbar ist.

Des Weiteren ist in DE 198 46 096 die Präparation von Suspensionen ternärer Oxide für Drucktinten beschrieben. Bei dieser Lösung ist nachteilig, dass hier ebenfalls nur Oxide und keine nichtoxidischen Pulver und Elementpulver verwendet werden und dass hier darüber hinaus nur aprotische Lösungsmittel eingesetzt werden, die mit Wasser oder wässrigen Lösungen nicht vergleichbar sind.

Aufgrund der Tatsache, dass in den beiden vorgenannten Veröffentlichungen des Standes der Technik nur Oxide behandelt werden, spielt dort die Frage der Passivierung im Sinne von Verhinderung einer Oxidation überhaupt keine Rolle.

Die Aufgabe der Erfindung besteht nun darin, ein Verfahren zur Dispergierung und Passivierung von feinteiligen Pulvern in Wasser und wässrigen Medien vorzuschlagen, mit dem alle Nachteile der Lösungen des Standes der Technik beseitigt werden. Insbesondere besteht die Aufgabe der Erfindung darin, ein Verfahren zur Dispergierung von feinteillgen Pulvern in Wasser zu finden, bei dem für nichtoxidische Pulver und Elementpulver gleichzeitig neben der Dispergierung eine Passivierung gegen den chemischen Angriff des Wassers erreicht wird und dadurch deren Sauerstoffgehalt im Vergleich zur Aufbereitung nach dem Stand der Technik nicht oder nur geringfügig ansteigt

Die Aufgabe wird durch die in Anspruch 1 angegebene Erfindung gelöst. Weiterbildungen sind Gegenstand der Ansprüche 2 bis 10. Bei dem erfindungsgemäßen Verfahren zur Dispergierung von feinteiligen Pulvern in Wasser und/oder wässrigen Medien und darüber hinaus zur Passivierung nichtoxidischer feinteiliger Pulver in Wasser werden wasserlösliche Polyvinylamine und/oder deren Vorprodukte, wie beispielsweise Polyvinylformamide, verwendet. Polyvinylamine haben die allgemeine Summenformel - [CH₂-CH-NH₂]ₙ- und besitzen in jeder Struktureinheit eine NH₂- (Amin-) Gruppe, die in Wasser protoniert werden kann. Polyvinylformamide haben die allgemeine Summenformel -[CH₂-CH-NH-CHO]ₙ- und weisen eine in Wasser protonierbare -NH-CHO- (Formamid) Gruppe auf.

Die verwendeten wasserlöslichen Polyvinylamine und/oder deren Vorprodukte weisen eine Molmasse von 5000 bis 350.000, vorzugsweise von 5000 bis 100.000 auf. Sie werden in einer Konzentration von 0,01 bis 10 Masse-%, bezogen auf den Feststoffgehalt der Suspension, vorzugsweise von 0,1 bis 0,5 Masse-% eingesetzt. Als feinteilige Pulver werden vor allem Hartmetallpulver, nichtoxidische keramische Pulver und/oder Elementpulver eingesetzt. Die verwendeten Hartmetallpulver bestehen dabei aus Carbiden, Nitriden und/oder Carbonitriden der Elemente der IV., V., und/oder VI. Nebengruppe des Periodensystems der Elemente (PSE), und Co, Ni und/oder Fe. Diese Hartmetallpulver können dabei aus einer Mischung von WC und/oder zum Teil anderen Hartstoffen, wie TiC, TaC, NbC, Cr₃C₂, VC, und Co und/oder zum Teil Ni und/oder Fe als Bindermetall und/oder aus einer Mischung von TiC oder TiCN und Mo₂C und Co und/oder Ni und/oder Fe als Bindermetall bestehen. Als nichtoxidische keramische Pulver werden Nitride, Carbide, Boride und/oder Silicide, wie beispielsweise Si₃N₄, SiC, AlN, BN, B₄C, TIN, TlC, ZrC und/oder ZrN verwendet. Als Elementpulver kommen kristalline und/oder amorphe Elemente der 3. und 4. Hauptgruppe des Periodensystems der Elemente (PSE) zum Einsatz. Dazu gehören z.B. elementares Bor und Silicium sowie Kohlenstoff in Form von Graphit, Diamantpulver, Ruße und andere amorphe und teilkristalline C-Modifikationen.

Erfindungsgemäß wird das Hilfsmittel Polivinylamin und/oder dessen Vorprodukte in der angegebenen Konzentration in Wasser unter Rühren gelöst und anschließend das feinteilige Pulver portionsweise unter weiterem Rühren und gegebenenfalls unter Ultraschallbehandlung eingetragen. Danach kann sich eine Mischmahlung in einer Kugelmühle, z.B. in einer Rührwerkskugelmühle anschließen. Der Feststoffgehalt der wässrigen Suspensionen beträgt 40-90 Masse-%, vorzugsweise 60-85 Masse-%. Mit dem Polyvinylamin und/oder dessen Vorprodukten als Hilfsmittel wird eine für die Zeit der Weiterverarbeitung stabile Suspension erhalten und es stellen sich Viskositäten ein, die für Sprühtrocknungsverfahren gut geeignet sind. Die Viskositäten liegen bei Feststoffgehalten von 70 % zum Beispiel im Bereich von 12-100 mPa*s bzw. bei Feststoffgehalten von 85 % zum Beispiel im Bereich von 20-300 mPa*s.

Die dynamische Mobilität, die als eine Messgröße für die elektrostatischen Abstoßungskräfte bzw. für die Berechnung des Zetapotentials die Stabilität und Dispergierbarkeit der feinteiligen Pulverpartikel in der Suspension beschreibt, erreicht bei einer Zugabekonzentration von z.B. 0.2 Masse-% Polyvinylamin und/oder dessen Vorprodukte bezogen auf den Feststoffgehalt Werte von 0,8 bis 2 m²(V*s)⁻¹, was ein Vielfaches der Werte darstellt, die unter Zugabe von Hilfsmitteln, die dem Stand der Technik genügen, erreicht werden können.

Es wurde gefunden, dass das beschriebene Verfahren zur Dispergierung von feinteiligen Pulvern mit Polyvinylamin und dessen Vorprodukten wie z.B. Polyvinylforamid als Hilfsmittel bei nichtoxidischen feinteiligen Pulvern und bei Elementpulvern darüber hinaus zu einer Passivierung dieser Pulver, d.h. zu deren Schutz gegenüber Oxidation und Hydrolyse und damit nicht oder nur zu einer geringfügigen Zunahme des Sauerstoffgehaltes im vergleich zur Aufbereitung nach dem Stand der Technik führt. Es wird vermutet, dass protonierte NH₂-Gruppen, die sich an einer jeden Struktureinheit des Polyvinylamins befinden und die nicht die durchgängige Kohlenstoffkette wie z.B. beim Polyethylenimin unterbrechen, besonders gut geeignet sind, auf Grund elektrostatischer und sterischer Wechselwirkungen mit den Ladungs- und Strukturverhältnissen der Pulveroberfläche einen wirksamen Schutz vor den Wassermolekülen zu bewirken. Durch das erfindungsgemäße Verfahren ist es möglich, sonst nicht in Wasser verarbeitbare feinteilige Pulver wie Hartmetallpulver, nichtoxidische keramische Pulver und

Elementpulver kostengünstig und umweltverträglich in Wasser zu verarbeiten, ohne dass deren Sauerstoffgehalt im Vergleich zur Aufbereitung nach dem Stand der Technik merklich ansteigt. Mit der erfindungsgemäßen Lösung konnten alle Nachteil des Standes der Technik beseitigt und die gestellten Aufgaben gelöst werden.

Nachfolgend wird die Erfindung an einigen Ausführungsbeispielen näher erläutert.

### Beispiel 1

Eine wässrige Suspension, die 72 Masse-% WC/Co-Pulver (davon 90 Masse-% WC und 10 Masse-% Co) enthält, wird hergestellt, indem 0,1 Masse-% Polyvinylamin mit einer Molmasse von < 10.000 g/mol, bezogen auf den Feststoffgehalt der Suspension, in Wasser gelöst und nachfolgend die Hartmetallpulvermischung eingerührt wird. Die WC-Korngröße betrug 0,5 µm. Nach 6 h Mischmahlung in einem Attritor betrug die Viskosiät 28 mPa*s, bei einer Scherrate von 240 min⁻¹. Der Sauerstoffgehalt nach der Mahlung betrug 0,38 %. Die dynamische Mobilität betrug 0,9 m²(V*s)⁻¹. Ohne Polyvinylamin als Zusatz erhöhte sich der Sauerstoffgehalt auf 0,7 %.

### Beispiel 2

Eine wässrige Suspension, die 72 Masse-% Hartmetall-Pulver (davon 59 Masse-% WC, 16 Masse-% TiC, 11,2 Masse-% TaC, 4,8 Masse-% NbC und 9 Masse-% Co) enthält, wird hergestellt, indem 0.15 Masse-% Polyvinylamin mit einer Molmasse von 45.000 g/mol, bezogen auf den Feststoffgehalt der Suspension, in Wasser gelöst und nachfolgend die Hartmetallpulvermischung eingerührt wird. Nach 6 h Mischmahlung in einem Attritor betrug die Viskosiät 15 mPa*s, bei einer Scherrate von 240 min⁻¹. Der Sauerstoffgehalt nach der Mahlung betrug 0,54 %. Die dynamische Mobilität betrug 1,2 m²(V*s)⁻¹.

### Beispiel 3

Eine wässrige Suspension, die 40 Masse-% keramische Siliciumnitridpulvermischung (davon 90 Masse-% Si₃N₄, 6 Masse-% Y₂O₃ und 4 Masse-% Al₂O₃) enthält, wird hergestellt, indem 0,6 Masse-% Polyvinylamin mit einer Molmasse von 45.000 g/mol, bezogen auf den Feststoffgehalt der Suspension, in Wasser gelöst und nachfolgend die Keramikpulvermischung eingerührt wird. Nach 3 h Mischmahlung in einem Laborattritor betrug die Viskosiät 32 mPa*s, bei einer Scherrate von 240 min⁻¹. Die dynamische Mobilität betrug 1,2 m²(V*s)⁻¹. Ohne Zusatz von Polyvinylamin betrugen die Viskosität 299 mPa*s und die dynamische Mobilität -0,9 m²(V*s)⁻¹

## Patentansprüche

1. Verfahren zur Dispergierung und Passivierung von feinteiligen Hartmetallpulvern, nichtoxidischen keramischen Pulvern und/oder Elementpulvern gegen Oxidation und Hydrolyse in Wasser und wässrigen Medien, wobei prozessbedingt Hilfsmittel zugegeben werden, **dadurch gekennzeichnet, dass** als Hilfsmittel wasserlösliche Polyvinylamine und/oder Polyvinylformamide verwendet werden.

2. Verfahren nach Anspruch 1, **dadurch gekennzeichnet, dass** die Polivinylamine und/oder Polyvinylformamide eine Molmasse von 5000 bis 350.000 haben.

3. Verfahren nach Anspruch 2, **dadurch gekennzeichnet, dass** Polyvinylamine und/oder Polyvinylformamide mit einer Molmasse zwischen 5000 und 100.000 verwendet werden.

4. Verfahren nach einem oder mehreren der Ansprüche von 1 bis 3, **dadurch gekennzeichnet, dass** die Polyvinylamine und/oder Polyvinylformamide in einer Konzentration von 0,01 bis 10 Masse-%, bezogen auf den Feststoffgehalt der Suspension, eingesetzt werden.

5. Verfahren nach Anspruch 4, **dadurch gekennzeichnet, dass** Polyvinylamine und/oder oder Polyvinylformamide in einer Konzentration von 0,1 bis 0,5 Masse-%, bezogen auf den Feststoffgehalt der Suspension, eingesetzt werden.

6. Verfahren nach einem oder mehreren der Ansprüche von 1 bis 5, **dadurch gekennzeichnet, dass** die Polyvinylamine und/oder Polyvinylformamide unter Rühren vor dem Eintragen der feinteiligen Pulver in Wasser gelöst werden.

7. Verfahren nach einem oder mehreren der Ansprüche von 1 bis 6, **dadurch gekennzeichnet, dass** als Hartmetallpulver Carbide, Nitride und/oder Carbonitride der Elemente der IV., V. und/oder VI. Nebengruppe des PSE (Periodensystem der Elemente) und Fe, Co, Ni einzeln, gemischt oder legiert verwendet werden.

8. Verfahren nach einem oder mehreren der Ansprüche von 1 bis 6, **dadurch gekennzeichnet, dass** als nichtoxidische keramische Pulver Nitride, Carbide, Boride und/oder Silicide verwendet werden.

9. Verfahren nach einem oder mehreren der Ansprüche von 1 bis 6, **dadurch gekennzeichnet, dass** als Elementpulver kristalline und/oder amorphe Elemente der 3. und 4. Hauptgruppe des PSE verwendet werden.

10. Verfahren nach einem oder mehreren der Ansprüche von 1 bis 9, **dadurch gekennzeichnet, dass** verwendete nichtoxidische feinteilige Pulver wie Hartmetall- Keramik- und Elementpulver in ihrem Sauerstoffgehalt nicht oder nur geringfügig zunehmen.

## Claims

1. Method of dispersing and passivating finely divided cemented hard material powders, nonoxidic ceramic powders and/or element powders against oxidation and hydrolysis in water and aqueous media, with auxiliaries required for the process being added, **characterized in that** water-soluble polyvinylamines and/or polyvinylformamides are used as auxiliaries.

2. Method according to Claim 1, **characterized in that** the polyvinylamines and/or polyvinylformamides have a molar mass of from 5000 to 350 000.

3. Method according to Claim 2, **characterized in that** polyvinylamines and/or polyvinylformamides having a molar mass in the range from 5000 to 100 000 are used.

4. Method according to one or more of Claims 1 to 3, **characterized in that** the polyvinylamines and/or polyvinylformamides are used in a concentration of from 0.01 to 10% by mass, based on the solids content of the suspension.

5. Method according to Claim 4, **characterized in that** polyvinylamines and/or polyvinylformamides are used in a concentration of from 0.1 to 0.5% by mass, based on the solids content of the suspension.

6. Method according to one or more of Claims 1 to 5, **characterized in that** the polyvinylamines and/or polyvinylformamides are dissolved in water with stirring before introduction of the finely divided powders.

7. Method according to one or more of Claims 1 to 6, **characterized in that** carbides, nitrides and/or carbonitrides of the elements of transition groups IV, V and/or VI of the PTE (Periodic Table of the Elements) and Fe, Co, Ni are used, either individually, as a mixture or in alloyed form, as cemented hard material powders.

8. Method according to one or more of Claims 1 to 6, **characterized in that** nitrides, carbides, borides and/or silicides are used as nonoxidic ceramic powders.

9. Method according to one or more of Claims 1 to 6, **characterized in that** crystalline and/or amorphous elements of the 3^{rd} and 4^{th} main groups of the PTE are used as element powders.

10. Method according to one or more of Claims 1 to 9, **characterized in that** the oxygen content of nonoxidic finely divided powders used, for example cemented hard material, ceramic and element powders, does not increase or increases only slightly.

## Revendications

1. Procédé pour disperser et passiver des poudres en métaux durs finement divisées, des poudres céramiques non oxydées et/ou des poudres d'éléments vis-à-vis de l'oxydation et de l'hydrolyse dans l'eau et les milieux aqueux, des adjuvantes étant ajoutés en fonction du procédé,
**caractérisé en ce qu'**
en tant qu'adjuvants on utilise des poly-vinyl-amines et/ou des poly-vinyl-formamides solubles dans l'eau.

2. Procédé selon la revendication 1,
**caractérisé en ce que**
les poly-vinyl-amines et/ou les poly-vinyl-formamides ont une masse molaire de 5 000 à 350 000.

3. Procédé selon la revendication 2,
**caractérisé en ce que**
l'on utilise des poly-vinyl-amines et/ou des poly-vinyl-formamides ayant une masse molaire comprise entre 5 000 et 100 000.

4. Procédé selon au moins l'une des revendications 1 à 3,
**caractérisé en ce que**
l'on met en oeuvre les poly-vinyl-amines et/ou les poly-vinyl-formamides selon une concentration de 0,01 à 10 % en masse par rapport à la teneur en matières solides de la suspension.

5. Procédé selon la revendication 4,
**caractérisé en ce que**
l'on met en oeuvre les poly-vinyl-amines et/ou les poly-vinyl-formamides selon une concentration de 0,1 à 0,5 % en masse par rapport à la teneur en matières solides de la suspension.

6. Procédé selon au moins l'une des revendications 1 à 5,
**caractérisé en ce que**
l'on dissout les poly-vinyl-amines et/ou les poly-vinyl-formamides dans l'eau sous agitation avant l'introduction de la poudre finement divisée.

7. Procédé selon au moins l'une des revendications 1 à 6,
**caractérisé en ce que**
en tant que poudres de métaux durs on utilise des carbures nitrures et/ou carbonitrures des éléments des sous groupes IV, V et/ou VI de la classification périodique des éléments et Fe, Co, Ni, isolément, en mélange ou sous forme alliée.

8. Procédé selon au moins l'une des revendications 1 à 6,
**caractérisé en ce que**
en tant que poudre céramique non oxydée, on utilise des nitrures, carbures, borures et/ou siliciures.

9. Procédé selon au moins l'une des revendications 1 à 6,
**caractérisé en ce que**
en tant que poudre d'éléments on utilise des éléments cristallins et/ou amorphes des groupes principaux 3 et 4 de la classification périodique des éléments.

10. Procédé selon au moins l'une des revendications 1 à 9,
**caractérisé en ce que**
la poudre finement divisée non oxydée utilisée telle que la poudre de métaux durs, la poudre céramique et la poudre d'éléments n'augmente pas sa teneur en oxygène ou que très faiblement.
